# EUROPEAN PATENT APPLICATION

(11) **EP 1 894 820 A1**
(43) Date of publication of application: **05.03.2008**
(21) Application number: 06119655.6
(22) Date of filing: 28.08.2006
(51) Int. Cl.: B62D 33/027, B62D 33/03, B62D 33/033, B62D 33/037, B60P 1/26

(54) **Hinge for openable side boards or tail gates of cargo carrying vehicles**

(71) Applicant: VBG AB, 462 28 Vänersborg (SE)
(72) Inventor: Andersson, Ragnvald, 467 94, Grästorp (SE)
(74) Representative: Edlund, Fabian

(57) **Abstract**

A panel arrangement for a cargo carrying vehicle (100) having a platform (107) for receiving cargo, comprising two vertical posts (104, 105), a panel (103; 203) arranged between the two vertical posts and a locking arrangement (108, 111, 112; 208, 209, 111, 112) for locking the panel. The arrangement further includes at least one hinge (106; 206) having a first part (115; 215) arranged to a lower longitudinal side of the panel, and a second part (116; 216) arranged onto the outer side (117) of the platform. The first and second parts are adapted to cooperate with each other to allow for a vertical movement of the panel as well as a rotation, and are further adapted to abut against each other when the panel is in its locked position, thereby securing the panel in the plane of the platform.

## Description

### Technical field

The present invention relates to a panel arrangement for a cargo platform of a cargo carrying vehicle.

### Technical background

Recently, there has been a development of "curtain-siders". Curtain-siders cargo carrying vehicles are a type of cargo carrying vehicles where the sides of a normal superstructure covering a cargo platform, comprising a sturdy structure comparable to a freight container with doors arranged in the back, have been replaced with curtains that are arranged on the sides of the cargo platform such that they can be pulled aside to facilitating loading and unloading of the cargo platform. The curtains are kept in place by a plurality of securing buckles.

Often, low removable panels are used in conjunction with the curtains. The panels provide strength and stability to the side curtains so that the cargo may be kept safely in its place. Normally, the panels are loose components with a length of 2 - 3 meters, and are arranged in slots or recesses of vertical posts that are typically arranged at the outer rim of the cargo platform. Consequently, the panels often have to be removed when unloading/loading the vehicle.

Because of the difficulty in handling the panels and their inherent weight, it is tempting for cargo operators to refrain from rearranging the panels after the unloading/loading work. This results in an increased risk of material damage to goods and potentially fatal accidents in the event of a loss of the cargo.

A solution to the above problem is disclosed in US 4 029 355, wherein a truck body tail gate structure for securing a cargo onto a truck is shown. Two elongated slots are provided in lower positions of vertically angled brackets arranged onto the back of the truck. The slots are arranged to cooperate with bolts arranged onto the lower portion of the sides of the tail gate such that the tail gate cannot be detached from the truck. At the upper side ends of the tail gate two bolts are arranged, which bolts in turns cooperates with two notches provided at the top of the brackets. To open the tail gate, the tail gate is lifted vertically such that the bolts are lifted above the notches, wherein the tail gate can be swung outward and downward into a horizontal level.

However, the described tail gate does not provide a solution for a general cargo carrying vehicle, such as a curtain-sider, where it in some cases is necessary to detach the panels from the sides of the cargo platform.

### Summary of the invention

There is therefore a need for an improved panel arrangement for a cargo carrying vehicle, substantially overcoming at least some of the disadvantages of the prior art, and more specifically overcoming or at least alleviating the problem with removable panels.

This and other objects are met by a panel arrangement for a cargo platform of a cargo carrying vehicle having a platform for receiving cargo, comprising at least two vertical posts arranged at the outer rim of the platform, and a panel arranged between two of the at least two vertical posts. Furthermore, the arrangement comprises a locking arrangement for locking the panel to the vertical posts in an upright closed position by means of its inherent weight, and at least one hinge having a first part arranged to a lower longitudinal side of the panel in its upright locked position, and a second part arranged onto the outer side of the platform, wherein the first and second parts of the hinge are adapted to cooperate with each other to allow for a vertical movement of the panel as well as a rotation of the panel around an axis parallel to the lower longitudinal side of the panel, the first and second parts are further adapted to abut against each other when the panel is in its locked position, thereby securing the panel in the plane of the platform.

With this arrangement, the panels can be secured both to the vertical posts and to the cargo platform. The arrangement will accordingly provide a support to the lower longitudinal end of the panels such that they will not bow out if a force is acting towards the inside of the panel, thus making the transportation of the cargo more secure.

Preferably, the at least one hinge is/are essentially symmetrically distributed along the lower longitudinal side of the panel. This provides for effective handling of the forces acting from the inside of the panel.

Furthermore, the first and second hinge parts are preferably adapted to allow for axial rotation of at least 180°, thus enabling the panels to be brought out and downward all the way such that the panels hangs in the hinge arrangement. With this design, the panel does not necessary have to be completely detached during loading/unloading of cargo from the cargo platform, but can instead hang from the side of the platform. The unloading/loading work will thus include fewer handling steps since the panels does not have to be removed from the cargo platform.

In one preferred embodiment of the present invention, the first and second hinge parts are detachably arranged to each other. The panel can thereby be detached from the posts, when that is necessary for the loading and unloading of cargo.

The inherent weight of the panel is generally enough for securing the panel in its upright position, however, in another preferred embodiment, the arrangement further comprises a securing device arranged to stop the panel from being lifted, either intentionally or unintentionally. The securing device can for example be a turnable element, or could of course be a different type of securing device, such as for example a clasp and clamp arrangement.

Further features of, and advantages with, the present invention will become apparent when studying the appended claims and the following description. Those skilled in the art realize that different features of the present invention can be combined to create embodiments other than those described in the following.

### Brief description of the drawings

These and other aspects of the present invention will now be described in more detail, with reference to the appended drawings showing currently preferred embodiments of the invention.

Figure 1a - c illustrate a panel arrangement according to a first embodiment of the present invention, in three different positions.

Figure 2 illustrates the panel arrangement in figure 1a in a position where the panel has been detached form the vehicle.

Figure 3 illustrates a panel arrangement according to a second embodiment of the present invention.

### Detailed description of the preferred embodiment

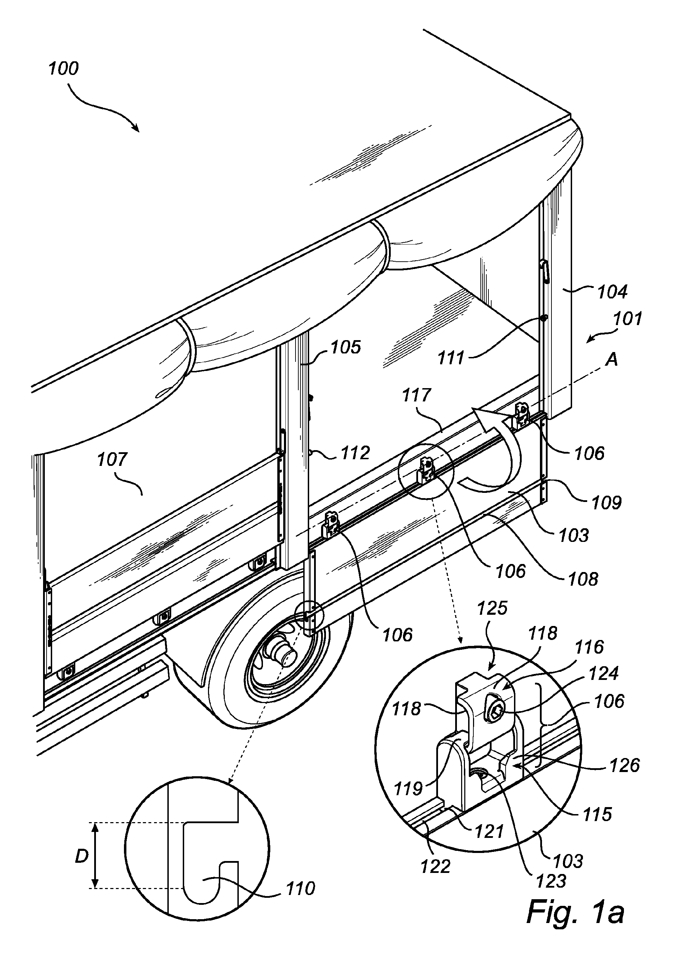

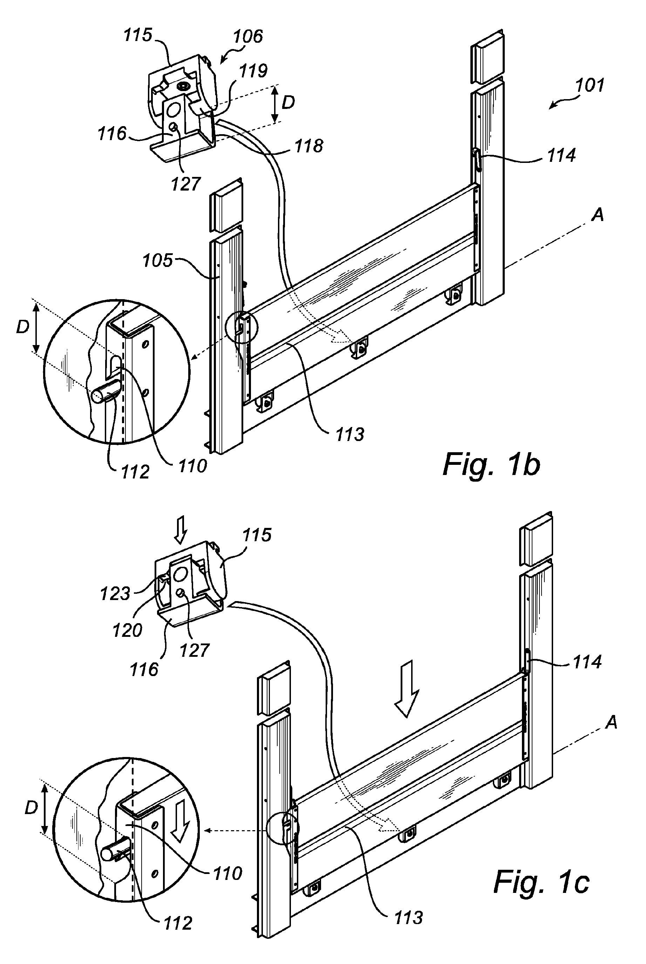

Referring now to the drawings and to figure 1a in particular, there is depicted a curtain-siders cargo carrying vehicle 100 comprising an arrangement 101 according to a currently preferred embodiment of the present invention. The arrangement 101 comprises a panel 103 arranged between two vertical posts 104, 105. At the lower longitudinal end of the panel 103, there has been arranged three hinge arrangements 106. The hinge arrangements 106 are preferably distributed essentially symmetrically along the lower longitudinal side of the panel 103. As is understood by the person skilled in the art, the number of hinge arrangements 106 will depend on the length of the panel 103, and the force that may incurred from the inside of the panel 103 due the cargo arranged onto a cargo platform 107 of the curtain-siders cargo carrying vehicle 100.

Each hinge arrangement 106 comprises a first part 115 and a second part 116 arranged to cooperate with each other and allow rotational and translational movement relative each other. The first part 115 is attached to the lower longitudinal side of the panel 103. In the illustrated example, the first hinge part 115 has a protruding part 121 that slides in a groove 122 in the lower longitudinal end of the panel 103. To secure the first part 115 of the hinge arrangement 106 at an appropriate position, a bolt 123 having an appropriate length has been screwed through the part 115 into contact with the bottom of the groove 122. The second hinge part 116 is attached to the outer side of the platform 107, here onto a beam 117. The hinge part 116 is here attached to the beam 117 by means of bolt 124, but there are other possibilities such as a rivet arrangement. If only one bolt 124 is used, the back side of hinge part 116 can by provided with a tap 127 (see figure 1b and 1c) adapted to cooperate with a hole in the beam 117. The tap 127 will then prevent the hinge part 116 from rotating around the bolt 124.

The second hinge part 116 has two outwardly convex flanges 118, one on either side, and the first hinge part 115 has a pair of jaws 119 engaging these flange from either side. The jaws 119 can slide in the space defined by the beam 117 on one side and the flanges 118 on the other, thus enabling the first hinge part 115 to be rotated as well as vertically translated in relation to the second hinge part 116 secured to the beam.

In figure 1a, the panel 103 has been rotated outward and downward around an axis A parallel to the lower longitudinal side of the panel 103 such that it hangs in the hinge arrangements 106. In this position, the jaws 119 abut against the lower portion of the flanges 118, and number and strength of the hinge parts 115 and 116 should be adapted to handle the weight of the panel 103.

The panel 103 further comprises a longitudinal groove 108 on the back of the panel 103. The outer ends of the groove 108, denoted 109 and 110, are arranged to cooperate with protruding pins 111 and 112, respectively, to secure the panel 103 when in an upright position, further discussed below.

Turning now to figure 1b, the panel 103 has been swung upward around the axis A, and lifted such that protruding pins 111, 112 hook into the ends 109 and 110 of the groove 108. On the front side of the panel 103 can be embedded a handle 113 which can be used to lift the panel 103. The described operation of the panel 103 resembles the operation of a front panel used in many freezers to cover a freezing-compartment.

In figure 1b, the post 105 has been partly broken away, and the area around pin 112 and groove end 110 has been enlarged to more clearly illustrate the engagement. It can be seen that the shape of the groove 108 is such that the panel 103 will be allowed to slide downwards a distance D, until the pin 112 abuts against the upper side of the groove 108.

One of the hinges 106 has been illustrated from behind, with the beam 117 removed to better illustrate the hinge parts 115 and 116. In the position in figure 1b, there is essentially no force exerted between the hinge parts 115 and 116, as the weight of the panel is being held by the operator. Preferably, however, the jaws 119 of hinge part 115 abut against the upper end of the flange 118 of hinge part 116 during movement of the panel from the hanging position in figure 1a to the upright position in figure 1b. The hinges 106 will then guide the panel 103, facilitating the act of hooking the groove 108 onto the pins 111, 112.It should be noted that the distance that the first and second hinge parts 115, 116 can be displaced vertically in relation to each other must be at least equal to the distance D required to lift the panel 103 in and out of engagement with the protruding pins 111, 112.

Next, as illustrated in figure 1c, the panel is allowed to slide downwards, pulled by its own weight, so that the pins 111, 112 firmly settle into the upper portion of the groove 108.

As best seen in figure 1a, on the upper side of hinge part 116, a gap 125 between each flange 118 and the beam 117. Further, on the first hinge part 115, facing the back side of the panel 103 and extending from the panel 103 towards the second hinge part 116, are two locking shoulders 126, adapted to fit into these gaps 125.

Returning to figure 1c, when the panel is allowed to slide into its upright locked position, the locking shoulders 126 are pressed into the gaps 125, so that the first and second hinge parts 115, 116 are firmly secured relative each other. This results in that the panel 103 is secured in the plane of the platform 107, and prevented from bowing out when cargo loaded onto the cargo platform 107 pushes against the panel 103.

Preferably, the distance D required to release the pins from the groove 108 is large enough to allow for the panel 103 to be safely secured, even when the curtain-siders cargo carrying vehicle 100 is driving on a bumpy road. Generally, the inherent weight of the panel 103 is enough for securing the panel in its upright position, since the panel 103 normally is constructed from a metal material, such as aluminum, or a sturdy piece of wooden material. Optionally, a securing device 114 can be arranged to stop the panel 103 from moving upwards, either intentionally or unintentionally. As illustrated in figure 1c, the securing device can be in the form of a pivotable latch. It would of course be possible to use a different type of securing device, such as for example a clasp and clamp arrangement.

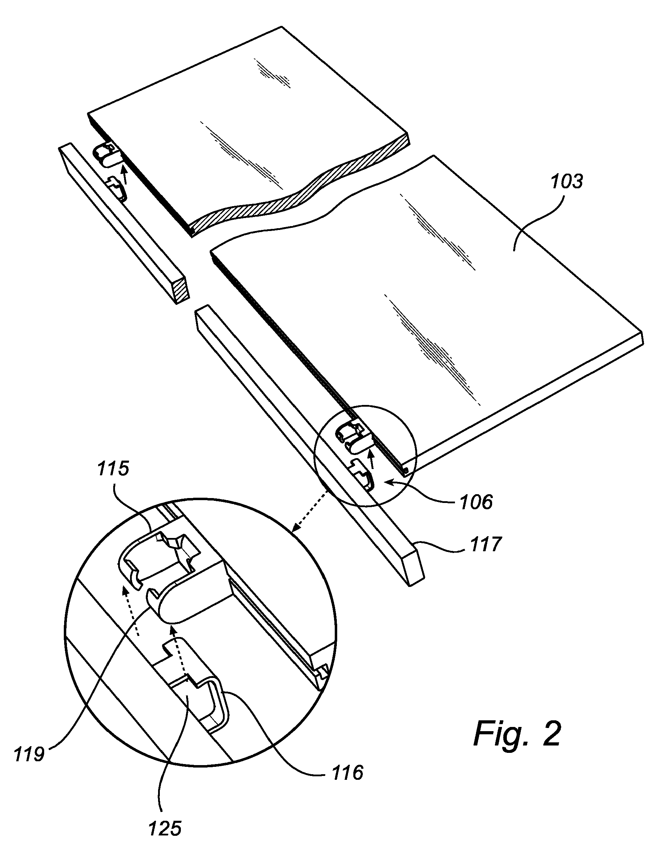

In figure 2, the panel 103 has been detached from the vehicle.

In order to detach the panel 103, it is swung out from the vehicle into an essentially horizontal position. In this position, the jaws 119 of the first hinge part 115 are positioned close to the beam 117. When the panel 103 now is lifted straight up, the jaws 119 are allowed to pass through the gaps 125 formed in the second hinge part 116.

The possibility to detach the panel 103 is not always necessary, and the gaps 125 and the jaws 119 may of course be formed to prevent such detachment, thus ensuring that the hinge parts 115, 116 are always interconnected.

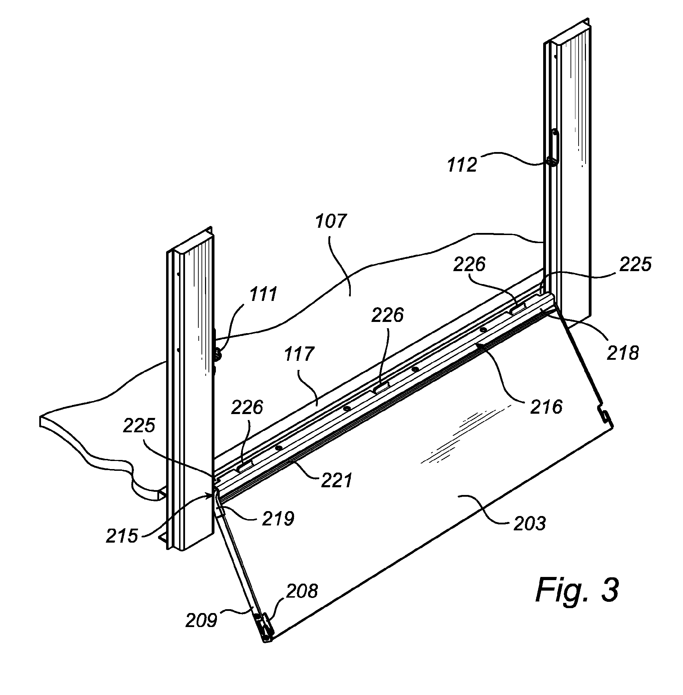

Figure 3 illustrates an alternative embodiment of a panel arrangement according to the present invention.

In this embodiment, the groove 108 has been replaced by two recesses 208 in either side of the panel 203. The recesses can be of any simple shape, and the required locking shape can be provided by a covering side plate 209. The pins 111, 112 will cooperate with the recess 208 and side plate 209 to provide a similar locking function as described with relation to the embodiment in figure 1.

In the embodiment in figure 3, the panel has only one hinge 206. The first hinge part 215 comprises the ends 219 of the side plates 209, which extend below the panel 203, and are bent inwards. The second hinge part 216 comprises a hollow profile member 218 extending along the beam 117. The profile 218 is open in both ends, so that the plate ends 219 can engage the profile member 218 from either side, much like the jaws of hinge part 115 engage the flange 118 of hinge part 116 in figure 1. The first hinge part 215 can thus be rotated and translated in relation to the second hinge part 216.

The profile member 218 is preferably provided with openings 225 in the upper side of either end, to allow for disengagement of the panel 203 by moving the bent plate ends 219 through the openings 225.

In order to secure the panel in the plane of the platform 107, when the panel 203 is in its upright closed position, the profile member is further provided with vertical protrusions 226. Such a protrusion can be formed by simply bending a piece of upper side of the profile member 218 upwards, as illustrated in figure 3. When the panel 203 is swung to its upright position, and allowed to slide down, the protrusions 226 will engage the groove 221 in the panel 203, thus providing a similar engagement as the shoulders 126 and gaps 125 in figure 1.

The person skilled in the art realizes that the present invention by no means is limited to the preferred embodiments described above. On the contrary, many modifications and variations are possible within the scope of the appended claims. For example, it is possible to either attach outer flanges to the panels comprising the above mentioned groves, as is illustrated in figure 1 - 3 and especially useful for retrofitting available panels, or simply include the groves in new panels.

## Claims

1. A panel arrangement for a cargo carrying vehicle (100) having a platform (107) for receiving cargo, comprising:
two vertical posts (104, 105) arranged at the outer rim of the platform; and
a panel (103; 203) arranged between said two vertical posts,
**characterized in**
a locking arrangement (108, 111, 112; 208, 209, 111, 112) for locking the panel to the vertical posts in an upright closed position by means of its inherent weight; and
at least one hinge (106; 206) having a first part (115; 215) arranged to a lower longitudinal side of said panel in its upright locked position, and a second part (116; 216) arranged onto the outer side (117) of the platform, said first and second parts being adapted to cooperate with each other to allow for a vertical movement of said panel as well as a rotation of said panel around an axis parallel to the lower longitudinal side of the panel, said first and second parts further being adapted to abut against each other when said panel is in its locked position, thereby securing said panel in the plane of the platform.

2. An arrangement according to claim 1, wherein said first and second hinge parts (115, 116; 215, 216) are adapted to allow for axial rotation of at least 180°.

3. An arrangement according to claim 1 or 2, wherein the first and second hinge parts (115, 116; 215, 216) are arranged to be detachable from one another.

4. An arrangement according to any one of the preceding claims, further comprising a securing device (114) for preventing the panel to move upwards when in its upright closed position.

5. An arrangement according to any one of the preceding claims, wherein said at least one hinge (106) is/are essentially symmetrically distributed along the lower longitudinal side of the panel (103).

6. An arrangement according to any one of the preceding claims, wherein said second part (116) has two outwardly convex flanges (118), and said first part (115) has two jaws (119) adapted to engage said flanges (118) from either side so as to interconnect said first and second hinge parts (115, 116), so that said jaws (119) are allowed to move in a space defined by said outer platform side (117) on one side, and by said flanges (118) on the other side.

7. An arrangement according to claim 5, wherein upper ends of said flanges (118) are separated from said outer platform side (117) by a gap (125), allowing passage of said jaws (119) for disengagement of said first hinge part (115) from said second hinge part (116).

8. An arrangement according to any one of claims 1 - 3, wherein said second hinge part (216) comprises a hollow profile member extending along the platform (207), and said first hinge part (215) comprises end portions (219) of side plates (209) arranged on either side of said panel (203), said end portions (219) being bent inwards and adapted to engage open ends of said profile member (218).

9. An arrangement according to claim 7, wherein said profile member has openings (225) on its upper side in either end, adapted to allow passage of said bent end portions (219) to thereby allow disengagement of said first hinge part (215) from said second hinge part (216).

10. An arrangement according to claim 7 or 8, wherein said profile member (218) further is provided with vertical protrusions (226) adapted to engage a groove (221) in the lower side of the panel (203) when the panel 203 is in its upright closed position.
